# EUROPÄISCHE PATENTANMELDUNG

(11) **EP 0 971 555 A2**
(43) Veröffentlichungstag der Anmeldung: **12.01.2000**
(21) Anmeldenummer: 99107799.1
(22) Anmeldetag: 20.04.1999
(51) Int. Cl.: H04Q 11/04

(54) **Verfahren zum Betrieb eines Telekommunikationsnetzes**

(30) Priorität: 23.06.1998 DE 19827791
(71) Anmelder: ROBERT BOSCH GMBH, 70442 Stuttgart (DE)
(72) Erfinder: Wagner, Joachim, 35625 Huettenberg (DE); Vautz, Rolf, 65795 Hattersheim (DE)

(57) **Zusammenfassung**

Die Erfindung betrifft ein Verfahren zum Betrieb eines Telekommunikationsnetzes, insbesondere zum Aufbau und zur Vermittlung von Breitband-ISDN-Verbindungen auf der Basis eines ATM-Übertragungsmodus, wobei jeweils zu einer Übertragung von Datenpaketen zwischen wenigstens zwei miteinander kommunizierenden Teilnehmern eine Nutzverbindung (connection) aufgebaut wird und nach der Datenübertragung wieder abgebaut wird, und wobei vor einem Aufbau einer Nutzverbindung zwischen den wenigstens zwei miteinander kommunizierenden Teilnehmern (30, 36, 40) eine logische Rufbeziehung (call) zwischen diesen aufgebaut wird.

Es ist vorgesehen, daß für die logische Rufbeziehung ein verbindungslos arbeitender Transportmechanismus verwendet wird.

## Beschreibung

Die Erfindung betrifft ein Verfahren zum Betrieb eines Telekommunikationsnetzes mit den im Oberbegriff des Anspruchs 1 genannten Merkmalen.

### Stand der Technik

Als Verfahren zur digitalen Signal- und Nachrichtenübermittlung ist ein sogenanntes Breitband-ISDN beziehungsweise B-ISDN, das sich vorzugsweise eines ATM-Übertragungsmodus bedient, bekannt. Diese Hochgeschwindigkeitspaketvermittlung wurde besonders für Breitband-ISDN als Vermittlungstechnik entwickelt und ist für Daten, Sprache, Text und Bilder gleichermaßen geeignet. ATM basiert auf sogenanntem FPS (fast packet switching), wobei die Daten zu Paketen von je 53 Oktetts (Byte) zusammengefaßt und zum Ziel geroutet werden.

Bei der ATM-Übertragung findet keine statische Signalisierungs- und Nutzkanaltrennung statt, sondern die Zellen führen jeweils einen sogenannten 5-Oktett-Header zur Steuerung des Durchlaufs durch das Netz mit. Die restlichen 48 Oktetts führen Nutzinformationen, beispielsweise Sprache, oder Signalisierungsinformationen. Ende-zu-Ende- beziehungsweise Punkt-zu-Punkt-Beziehungen sind grundsätzlich verbindungsorientiert, benötigen somit jeweils einen Verbindungsaufbau, eine Datenübertragungsphase und einen Verbindungsabbau.

Insbesondere im Zusammenhang mit der Multimedia-Kommunikation wird eine funktionale Trennung von Kontrollinstanzen für den Aufbau und die Behandlung von Nutzverbindungen (connection) und andererseits den Aufbau einer logischen Rufbeziehung (call) vor dem eigentlichen Aufbau der Nutzverbindungen diskutiert.

### Vorteile der Erfindung

Das erfindungsgemäße Verfahren weist im Gegensatz zu bekannten verbindungsorientiert arbeitenden Signalisierungsprotokollen den Vorteil auf, daß für einen Aufbau einer logischen Rufbeziehung ein verbindungslos arbeitender Transportmechanismus verwendet wird. Dadurch lassen sich in vorteilhafter Weise erhebliche Netzressourcen beziehungsweise Kapazitäten eines Kommunikationsnetzes sowie vorhandener Endgeräte einsparen. Zudem können auf diese Weise die bei verbindungsorientiert arbeitenden Übertragungsverfahren unvermeidlich auftretenden Aufbauzeiten zur Herstellung der Verbindungen minimiert werden.

Weitere Vorteile ergeben sich bei einer Integration mobiler Endgeräte in die logische Rufbeziehung. Bei einem Ortswechsel eines Endgerätes muß bei verbindungsorientiert arbeitenden Übertragungsverfahren diese Verbindung mitwandern, wodurch ständig Teile des Netzes neu aufgebaut werden müssen. Ein solcher notwendiger Neuaufbau kann im Falle eines verbindungslos arbeitenden Transportmechanismus entfallen.

In einer bevorzugten Ausgestaltung der Erfindung können neben dem Aufbau der logischen Rufbeziehung deren Eigenschaften vereinfacht ausgehandelt werden. Durch Übertragung eines Parameters der logischen Rufbeziehung in Form eines Integer-Wertes können die Eigenschaften einer logischen Rufbeziehung vollständig beschrieben werden. Dies kann insbesondere dadurch erreicht werden, daß jedem Parameterwert innerhalb eines möglichen Wertebereichs des Integer-Wertes über eine Tabelle die vollständige Beschreibung der logischen Rufbeziehung eindeutig zuordenbar ist. Bei einem Empfang einer Aufforderung zum Aufbau einer logischen Rufbeziehung kann der empfangende Netzteilnehmer den Parameterwert auf Kompatibilität mit den unterstützten Eigenschaften überprüfen. Dieses Verfahren setzt voraus, daß die Zuordnung der Integer-Werte zu den Eigenschaften der logischen Rufbeziehungen vorher festgelegt wird sowie zum Zeitpunkt des Aufbaus einer logischen Rufbeziehung in allen daran beteiligten funktionalen Einheiten bekannt ist.

Da in multimedialen Netzen oftmals neue Dienste hinzukommen und somit neue mögliche Eigenschaften für logische Rufbeziehungen berücksichtigt werden müssen, ist es vorteilhaft, eine Tabelle mit abgelegten Eigenschaften in regelmäßigen Zeitabständen aktualisieren zu können. Dies erfolgt zweckmäßigerweise durch einen Netzserver, der jederzeit den aktuellen Stand dieser Zuordnungs-Tabelle enthält, und der von allen Netzknoten und Endeinrichtungen abgefragt werden kann.

Bevorzugt ist weiterhin ein erfindungsgemäßes Verfahren, bei dem die Eigenschaften einer logischen Rufbeziehung während ihres Bestehens verändert werden können. Damit kann bei einem Veränderungswunsch eines beteiligten Teilnehmers eine Unterbrechung einer bestehenden Kommunikation verhindert werden, da kein vollständiger Neuaufbau der logischen Rufbeziehung notwendig wird. Durch eine Übertragung von zusätzlichen Nachrichten in Form von sogenannten Protokoll-Dateneinheiten (PDUs) können die Eigenschaften von bestehenden logischen Rufbeziehungen dynamisch verändert werden. Die bestehenden Nutzverbindungen bleiben dabei in jedem Fall unbeeinträchtigt.

Das erfindungsgemäße Verfahren kann in bevorzugter Weise auf Punkt-zu-Mehrpunkt-Rufbeziehungen angewandt werden. Die Vorteile des Aufbaus einer logischen Rufbeziehung vor dem Aufbau einer Nutzverbindung treten besonders dann hervor, wenn die Nutzverbindungen erst dann aufgebaut werden und damit die Ressourcen im Netz erst dann belegt werden, wenn alle beteiligten Teilnehmer in die Beziehung eingetreten sind. Hierbei wird von einem Initiator zunächst festgelegt, welche Teilnehmer an einer logischen Rufbeziehung teilnehmen sollen und ob ihre Teilnahme zwingend erforderlich oder optional ist beziehungsweise ob einer der Teilnehmer ein Ablehnungsrecht hat. Über einen Koordinationspunkt im Netz werden die gewünschten Teilnehmer angesprochen und darüber informiert, daß sie zur Teilnahme an einer logischen Rufbeziehung vorgesehen sind. Gleichzeitig wird ihnen die Prioritätsstufe mitgeteilt. Bei erfolgreichem Aufbau der logischen Rufbeziehung erhält der Initiator eine positive Rückmeldung, womit die Rufbeziehung aktiv ist. Bei einem erfolglosen Verbindungsaufbau zu wenigstens einem der zwingend erforderlichen Teilnehmer erhält der Initiator eine negative Rückmeldung, wobei unerheblich ist, ob der gerufene Teilnehmer nicht erreichbar ist oder die Teilnahme an der Beziehung aktiv ablehnt. Die logische Rufbeziehung kommt somit nicht zustande.

In einer bevorzugten Weiterbildung der Erfindung ist vorgesehen, bei bestehenden logischen Rufbeziehungen einzelne Teilnehmer hinzufügen beziehungsweise herausnehmen zu können. Nach einem erfolgreichen Aufbau einer logischen Punkt-zu-Mehrpunkt-Rufbeziehung kann sich die Notwendigkeit ergeben, weitere Teilnehmer mit in die Beziehung aufzunehmen beziehungsweise einzelne Teilnehmer aus der Beziehung zu entfernen. Dies kann vorzugsweise durch Übertragung von Aufforderungen des Initiators zur Aufnahme oder zur Beendigung einer logischen Rufbeziehung an einzelne Teilnehmer erfolgen. Der angesprochene Teilnehmer kann dies positiv oder negativ quittieren. Falls ein gerufener Teilnehmer nicht antwortet, kann eine derartige Quittierung nach Verstreichen einer bestimmten Überwachungszeit auch durch das Netz erfolgen. Eine Aufforderung zum Beenden einer Teilnahme an einer logischen Rufbeziehung kann von dem angesprochenen Teilnehmer ausschließlich positiv quittiert werden. Falls der Teilnehmer nicht anwortet, erfolgt die positive Quittung durch das Netz. Eventuell bestehende Nutzverbindungen zu diesem Teilnehmer werden ebenfalls getrennt.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: den Nachrichtenfluß für den Aufbau beziehungsweise die Veränderung einer erfindungsgemäßen logischen Rufbeziehung;
- Figur 2: einen beispielhaften funktionalen Aufbau für eine Punkt-zu-Mehrpunkt-Konfiguration und
- Figuren 3a bis 3e: einen typischen Verfahrensablauf einer dynamischen Veränderung der Teilnehmerzahl einer logischen Punkt-zu-Mehrpunkt-Rufbeziehung.

### Beschreibung der Ausführungsbeispiele

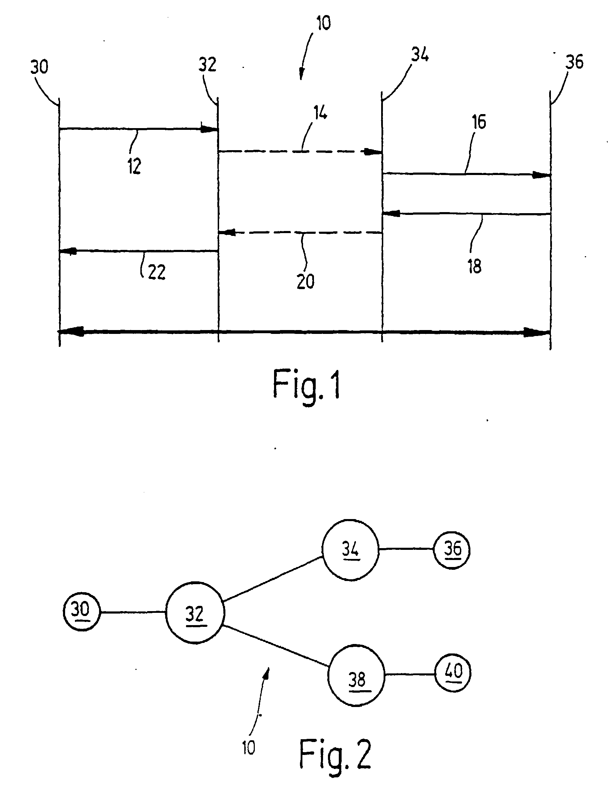

Figur 1 zeigt einen beispielhaften Nachrichtenfluß, wie er bei einer erfolgreichen Veränderung einer logischen Rufbeziehung abläuft. Hierbei werden mit zusätzlichen Nachrichten bereits bestehende logische Rufbeziehungen in ihren Eigenschaften verändert, was sowohl im Sinne einer Qualitätssteigerung als auch im Sinne einer Qualitätssenkung möglich ist. Eine Veränderung einer bestehenden Rufbeziehung ist nur dann möglich, falls bereits vorhandene Nutzverbindungen in ihren Eigenschaften zur veränderten logischen Rufbeziehung passen. Dies muß jeweils von allen an der Rufbeziehung beteiligten Instanzen überprüft werden. Im Fehlerfall kommt eine Veränderung nicht zustande, so daß die Eigenschaften der ursprünglichen Rufbeziehung erhalten bleiben.

Die Kommunikation vollzieht sich von einem ersten Endgerät beziehungsweise Initiator 30 zu einem zweiten Endgerät beziehungsweise zu einem Teilnehmer 36, welche über eine bestehende Nutzverbindung zur Signalübertragung, die während der Eigenschaftsänderung der logischen Rufbeziehung unverändert bleibt, verfügen. Der Initiator 30 sendet hierzu eine sogenannte Call-Modify-PDU (Protocol Data Unit beziehungsweise Protokoll-Dateneinheit) zu seinem Netzzugang beziehungsweise seinem Netzknoten 32.

Unter einer Protokoll-Dateneinheit (PDU) wird in diesem Zusammenhang eine Nachrichteneinheit, bestehend aus einer Information als sogenannte Dienst-Dateneinheit (Service Data Unit beziehungsweise SDU), verstanden. Der Steuerkopf (beziehungsweise Header) wird üblicherweise als Protokoll-Kontrollinformation (Protocol Control Information beziehungsweise PCI) bezeichnet. Die Dienst-Dateneinheit SDU und die Protokoll-Kontrollinformation PCI bilden zusammen die Protokoll-Dateneinheit PDU.

Diese Call-Modify-PDU wird über das Netz 10 zu einem Netzzugang 34 des zweiten Endgerätes beziehungsweise Teilnehmers 36 übertragen. Wenn die Nutzverbindung in ihren Eigenschaften zur veränderten Rufbeziehung paßt, sendet das zweite Endgerät 36 eine sogenannte Call-Modify-Response-PDU 18 über das Netz 10 zurück zum Initiator 30. Sobald diese Antwort beim Initiator 30 eingetroffen ist, kann die logische Rufbeziehung verändert werden.

Figur 2 zeigt einen beispielhaften funktionalen Aufbau für eine Punkt-zu-Mehrpunkt-Konfiguration, wobei im gezeigten Ausführungsbeispiel drei Teilnehmer beteiligt sind. Das Konzept der Trennung der logischen Rufbeziehungen von den eigentlichen Nutzverbindungen kann auch auf Punkt-zu-Mehrpunkt-Beziehungen sinnvoll erweitert werden. Die Vorteile des Aufbaus einer logischen Rufbeziehung vor dem Aufbau der Nutzverbindung treten besonders dann hervor, wenn die Nutzverbindungen erst dann aufgebaut werden und damit die Ressourcen erst dann belegt werden, wenn alle beteiligten Teilnehmer in die Rufbeziehung eingetreten sind. Durch das im folgenden beschriebene Verfahren ist es einem Initiator 30 einer logischen Punkt-zu-Mehrpunkt-Rufbeziehung ermöglicht, in seiner Anforderung an ein Netz zusätzlich zu den Angaben die Adressen der gewünschten Teilnehmer 36, 40 auszuwählen, welche an der Beziehung teilnehmen sollen. In Form beispielsweise einer Tabelle teilt dazu der Initiator 30 über eine Punkt-zu-Punkt-Signalisierungsbeziehung einem Koordinationspunkt 32 im Netz die Adressen der gewünschten Teilnehmer 36, 40 mit sowie zu jeder Adresse einen Prioritätsparameter, der angibt, ob die Teilnahme des durch die Adresse bestimmten Teilnehmers einer logischen Punkt-zu-Mehrpunkt-Rufbeziehung erforderlich, erwünscht oder optional ist. Folgende Tabelle zeigt beispielhaft eine derartige Anforderung einer logischen Punkt-zu-Mehrpunkt-Rufbeziehung:

| Teilnehmer | Adresse | Priorität | |
|---|---|---|---|
| 1 | Adresse_1 | 1 | Teilnahme zwingend erforderlich |
| 2 | Adresse_2 | 1 | Teilnahme zwingend erforderlich |
| 3 | Adresse_3 | 1 | Teilnahme zwingend erforderlich |
| 4 | Adresse_4 | 2 | Teilnahme erforderlich/erwünscht, wobei der gerufene Teilnehmer jedoch ein Ablehnungsrecht hat |
| 5 | Adresse_5 | 2 | Teilnahme erforderlich/erwünscht, wobei der gerufene Teilnehmer jedoch ein Ablehnungsrecht hat |
| 6 | Adresse_6 | 3 | Teilnahme optional |
| ... | ... | ... | ... |
| n | Adresse_n | 3 | Teilnahme optional |

Von dem Koordinationspunkt 32 im Netz gehen nun jeweils über Punkt-zu-Punkt-Signalisierungsbeziehungen logische Rufbeziehungen über die jeweiligen Netzknoten 34, 38 zu den gewünschten Teilnehmern 36, 40 aus. Hierbei wird den Teilnehmern 36, 40 neben einer Aufforderung zur Teilnahme an einer logischen Punkt-zu-Mehrpunkt-Rufbeziehung eine Prioritätsstufe mitgeteilt. Ist der Aufbau der logischen Rufbeziehung zu allen zwingend erforderlichen Teilnehmern erfolgreich, so erhält der Initiator 30 der Beziehung eine positive Rückmeldung, die eine Liste der beteiligten Teilnehmer enthält. Eine derartige logische Rufbeziehung zeigt beispielhaft die Figur 2 mit dem Initiator 30, der in Verbindung zum Koordinationspunkt 32 steht, von dem aus jeweils Punkt-zu-Punkt-Signalisierungsbeziehungen zu hier beispielhaft gezeigten zwei Teilnehmern 36, 40 ausgehen. Der Netzpunkt 34 steht in Verbindung mit dem Teilnehmer 36, und der Netzpunkt 38 steht in Verbindung mit dem Teilnehmer 40. Ist der Aufbau der logischen Rufbeziehungen zu wenigstens einem der zwingend erforderlichen Teilnehmer nicht erfolgreich verlaufen, so erhält der Initiator 30 der Beziehung eine negative Rückmeldung, die eine Liste der nicht erfolgreichen Teilnehmer enthält. Es ist hierbei unerheblich, ob die gerufenen Teilnehmer nicht erreichbar sind oder die Teilnahme an der Beziehung aktiv ablehnen. Die logische Punkt-zu-Mehrpunkt-Rufbeziehung kommt dann nicht zustande.

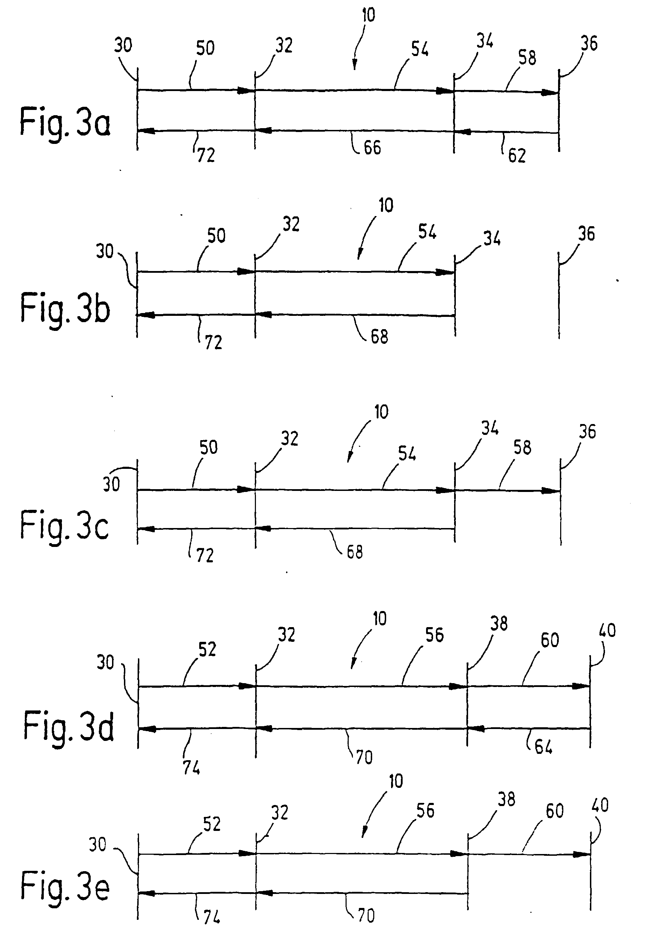

Figur 3 zeigt beispielhaft einen typischen Verfahrensablauf einer dynamischen Veränderung der Teilnehmerzahl einer logischen Punkt-zu-Mehrpunkt-Rufbeziehung. Beim Aufbau einer logischen Punkt-zu-Mehrpunkt-Rufbeziehung müssen dem Netz die Adressen der gewünschten Teilnehmer mitgeteilt werden sowie eventuelle Angaben gemacht werden, welche der Teilnehmer für das Zustandekommen der Rufbeziehung mindestens erforderlich sind. Nach einem erfolgreichen Aufbau kann sich jedoch während einer logischen Rufbeziehung die Notwendigkeit ergeben, weitere Teilnehmer mit in die Beziehung aufzunehmen beziehungsweise einzelne Teilnehmer aus der Beziehung zu entfernen. Die Signalisierung erfolgt in grundsätzlich gleicher Weise wie beim Aufbau der logischen Rufbeziehung.

Die Figur 3a zeigt in einer ersten Situation eine Hinzufügung eines Teilnehmers zu einer logischen Punkt-zu-Mehrpunkt-Rufbeziehung. Hierbei wird vom Initiator 30 zunächst eine Aufforderung 50 zum Netzknoten 32 gesendet. Vom Netzknoten 32 wird an das Empfängernetz 34 eine Aufforderung 54 zur Teilnahme an einer logischen Rufbeziehung und von dort als Aufforderung 58 zum gewünschten Teilnehmer 36 gesendet. Ebenso wie beim Aufbau der Beziehungen wird jeweils ein Beschreibungsparameter (Call Description, CD) mit übertragen, der die Eigenschaften der logischen Rufbeziehung festlegt. Die Quittung 62 erfolgt durch den Teilnehmer 36 und wird vom Netz 34 als Antwort 66 zum Netzknoten 32 übertragen und von dort als (positive) Antwort 72 zum Initiator 30.

Figur 3b zeigt eine Situation, bei der das Netz 34 stellvertretend für den gerufenen Teilnehmer 36 die Aufforderung 50, 54 zur Teilnahme an der logischen Rufbeziehung negativ quittiert. Die negative Antwort 68 wird hierbei direkt vom Netz 34 generiert und an den Netzknoten 32 übertragen. Von dort erfolgt wiederum die Übertragung der (negativen) Antwort 72 zum Initiator 30.

Figur 3c zeigt eine weitere Situation, bei der der gerufene Teilnehmer 36 nicht auf die Aufforderung 58 zur Teilnahme an der logischen Rufbeziehung reagiert. Das Netz 34 quittiert nach Ablauf einer Überwachungszeit negativ und sendet wie im Ausführungsbeispiel zur Figur 3b eine negative Antwort 68 an den Netzknoten 32.

Figur 3d zeigt eine alternative Situation einer Herausnahme eines Teilnehmers 40 aus einer bestehenden logischen Punkt-zu-Mehrpunkt-Rufbeziehung. Hierbei wird vom Initiator 30 eine Aufforderung 52 zur Herausnahme des Teilnehmers 40 aus der Rufbeziehung an den Netzknoten 32 gesendet. Dieser überträgt eine Aufforderung 56 zum Beenden der Teilnahme an der logischen Rufbeziehung zum Netz 38, das die Aufforderung 60 an den Teilnehmer 40 sendet. Die Quittung 64 an das Netz 38 erfolgt durch den gewünschten Teilnehmer 40 und kann in diesem Fall nur positiv sein. Diese positive Quittung wird als Antwort 70 an den Netzknoten 32 übertragen und als Quittierung 74 dem Initiator 30 mitgeteilt. Eventuell bestehende Nutzverbindungen zu diesem Teilnehmer 40 werden damit ebenfalls getrennt.

Die Figur 3e zeigt schließlich eine Situation, bei der der gerufene Teilnehmer 40 nicht auf die Aufforderung 60 zum Beenden der Teilnahme an der logischen Rufbeziehung reagiert. Das Netz 38 quittiert in diesem Fall nach Ablauf einer Überwachungszeit positiv und sendet die positive Antwort 70 an den Netzknoten 32. Eventuell bestehende Nutzverbindungen zu diesem Teilnehmer 40 werden ebenfalls getrennt.

## Patentansprüche

1. Verfahren zum Betrieb eines Telekommunikationsnetzes, insbesondere zum Aufbau und zur Vermittlung von Breitband-ISDN-Verbindungen auf der Basis eines ATM-Übertragungsmodus, wobei jeweils zu einer Übertragung von Datenpaketen zwischen wenigstens zwei miteinander kommunizierenden Teilnehmern eine Nutzverbindung (connection) aufgebaut wird und nach der Datenübertragung wieder abgebaut wird, und wobei vor einem Aufbau einer Nutzverbindung zwischen den wenigstens zwei miteinander kommunizierenden Teilnehmern (30, 36, 40) eine logische Rufbeziehung (call) zwischen diesen aufgebaut wird, **dadurch gekennzeichnet**, daß für die logische Rufbeziehung ein verbindungslos arbeitender Transportmechanismus verwendet wird.

2. Verfahren nach Anspruch 1, **dadurch gekennzeichnet**, daß während einer bestehenden logischen Rufbeziehung deren Eigenschaften verändert werden können.

3. Verfahren nach Anspruch 2, **dadurch gekennzeichnet**, daß die Veränderung der Eigenschaften einer logischen Rufverbindung durch eine Übertragung zusätzlicher Nachrichten erfolgt.

4. Verfahren nach einem der vorhergehenden Ansprüche, **dadurch gekennzeichnet**, daß das Aushandeln der Eigenschaften einer logischen Rufbeziehung durch Übertragung eines Beschreibungsparameters (call descriptor) erfolgt, der für die logische Rufbeziehung übertragen wird.

5. Verfahren nach einem der vorhergehenden Ansprüche, **dadurch gekennzeichnet**, daß der Aufbau einer logischen Rufbeziehung und das Aushandeln ihrer Eigenschaften getrennt voneinander erfolgen.

6. Verfahren nach einem der vorhergehenden Ansprüche, **dadurch gekennzeichnet**, daß der Beschreibungsparameter einen Integer-Wert darstellt, der die Eigenschaften der gewünschten logischen Rufbeziehung vollständig beschreibt.

7. Verfahren nach einem der vorhergehenden Ansprüche, **dadurch gekennzeichnet**, daß jedem innerhalb des Wertebereichs möglichen Wert des Beschreibungsparameters über eine Tabelle die vollständige Beschreibung einer logischen Rufbeziehung eindeutig zugeordnet wird.

8. Verfahren nach einem der vorhergehenden Ansprüche, **dadurch gekennzeichnet**, daß Sender und Empfänger der logischen Rufbeziehung den Beschreibungsparameter mit einem in der Tabelle abgelegten Wert vergleichen und damit die Kompatibilität überprüfen.

9. Verfahren nach Anspruch 8, **dadurch gekennzeichnet**, daß bei einer nicht vollständigen Kompatibilität des Beschreibungsparameters mit dem in der Tabelle abgelegten Wert eine Überprüfung auf mögliche Alternativen erfolgt.

10. Verfahren nach einem der vorhergehenden Ansprüche, **dadurch gekennzeichnet**, daß alle möglichen Integer-Werte mit jeweils zugeordneten Eigenschaften in einer zentral zugänglichen Tabelle auf einem Server abgespeichert sind.

11. Verfahren nach einem der vorhergehenden Ansprüche, **dadurch gekennzeichnet**, daß die Tabelle in regelmäßigen Zeitabständen dynamisch verändert wird.

12. Verfahren nach einem der vorhergehenden Ansprüche, **dadurch gekennzeichnet**, daß eine Erweiterung der logischen Rufbeziehungen auf Punkt-zu-Mehrpunkt-Beziehungen möglich ist.

13. Verfahren nach einem der vorhergehenden Ansprüche, **dadurch gekennzeichnet**, daß die Nutzverbindungen erst dann aufgebaut werden, wenn alle beteiligten Teilnehmer (30, 36, 40) in die Beziehung eingetreten sind.

14. Verfahren nach einem der vorhergehenden Ansprüche, **dadurch gekennzeichnet**, daß in einem Koordinierungspunkt im Netz eine Tabelle abgelegt ist, die zusätzliche Informationen über Prioritätstufen der Teilnehmer enthält.

15. Verfahren nach einem der vorhergehenden Ansprüche, **dadurch gekennzeichnet**, daß bei der Herstellung einer logischen Rufbeziehung die gerufenen Teilnehmer darüber informiert werden, daß sie zur Teilnahme an der logischen Rufbeziehung aufgefordert sind (& Information der Parteien über die Prioritätsstufe).

16. Verfahren nach einem der vorhergehenden Ansprüche, **dadurch gekennzeichnet**, daß bei der Herstellung einer logischen Rufbeziehung die gerufenen Teilnehmer über die Prioritätsstufe informiert werden.

17. Verfahren nach einem der vorhergehenden Ansprüche, **dadurch gekennzeichnet**, daß nach einem erfolgreichen Aufbau einer logischen Punkt-zu-Mehrpunkt-Rufbeziehung eine Hinzufügung und eine Entfernung von Teilnehmern möglich ist.

18. Verfahren nach einem der vorhergehenden Ansprüche, **dadurch gekennzeichnet**, daß eine Übertragung von CDs (Call Description) zu den Teilnehmern erfolgt, die diese positiv oder negativ quittieren sollen.

19. Verfahren nach einem der vorhergehenden Ansprüche, **dadurch gekennzeichnet**, daß stellvertretend für einen gerufenen Teilnehmer das Netz die Aufforderung zur Teilnahme an der logischen Rufbeziehung positiv oder negativ quittieren kann.

20. Verfahren nach einem der vorhergehenden Ansprüche, **dadurch gekennzeichnet**, daß bei einer nicht erfolgten Reaktion eines gerufenen Teilnehmers das Netz nach Ablauf einer Überwachungszeit negativ quittiert.

21. Verfahren nach einem der vorhergehenden Ansprüche, **dadurch gekennzeichnet**, daß eine Herausnahme eines Teilnehmers aus einer logischen Rufbeziehung durch Aufforderung des Initiators erfolgt, wobei nur eine positive Quittierung möglich ist.

22. Verfahren nach einem der vorhergehenden Ansprüche, **dadurch gekennzeichnet**, daß bei einer nicht erfolgten Reaktion eines gerufenen Teilnehmers das Netz nach Ablauf einer Überwachungszeit positiv quittiert und damit eine Herausnahme des Teilnehmers erfolgt.
